# FASCICULE DE BREVET EUROPEEN

(11) **EP 4 034 431 B1**
(45) Date de publication et mention de la délivrance du brevet: **18.10.2023**
(21) Numéro de dépôt: 20757627.3
(22) Date de dépôt: 22.07.2020
(51) Int. Cl.: H01M 10/0525, H01M 10/613, H01M 10/6563, H01M 10/66, H01M 50/204, H01M 50/271, H01M 50/296, H01M 50/502, H01M 10/625, B60R 16/04

(54) **CARTER EN TROIS PARTIES POUR UNE BATTERIE DE VÉHICULE AUTOMOBILE**
DREITEILIGES GEHÄUSE FÜR EINE KRAFTFAHRZEUGBATTERIE
THREE-PART HOUSING FOR A MOTOR VEHICLE BATTERY

(30) Priorité: 24.09.2019 FR 1910516
(43) Date de publication de la demande: 03.08.2022
(73) Titulaire: PSA Automobiles SA, 78300 Poissy (FR)
(72) Inventeur: CASTELLI, Bruno, 92300 LEVALLOIS PERRET (FR); FALER, Matthieu, 91690 SACLAS (FR)
(86) Numéro de dépôt international: PCT/FR2020/051329
(87) Numéro de publication internationale: WO 2021/058884

(56) Documents cités:
- EP-A1- 0 704 918
- WO-A1-2016/032945
- FR-A1- 2 898 094
- FR-A1- 2 997 559
- US-A- 4 054 730
- US-A- 5 031 712
- US-A- 5 681 668

## Description

La présente invention revendique la priorité de la demande française 1910516 déposée le 24.09.2019

La présente invention porte sur un carter en trois parties pour une batterie de véhicule automobile.

Les véhicules automobiles ayant un moteur thermique comportent généralement une ou plusieurs batteries reliées au réseau de bord, appelées aussi batteries de servitude, pour alimenter les équipements de ces véhicules, notamment un démarreur d'un moteur thermique. D'autres véhicules, s'ils sont à propulsion électrique ou hybride, comportent une ou plusieurs batteries de traction reliées à un réseau de puissance pour alimenter les moteurs électriques de traction.

On comprend par batterie un ensemble comprenant au moins un module de batterie contenant au moins une cellule électrochimique, la batterie de servitude étant considérée équivalente à au moins un module. Cette batterie comprend éventuellement des moyens électriques ou électroniques pour la gestion d'énergie électrique de ce au moins un module. Lorsqu'il y a plusieurs modules, ils sont regroupés de façon à former un bloc batterie souvent désigné par l'expression anglaise "pack batteries". Le terme "batterie" englobe également le sens d'un "bloc batterie". Par ailleurs, on comprend par "cellule électrochimique", des cellules générant du courant par réaction chimique, par exemple de type lithium-ion (ou Li-ion), de type Ni-Mh, ou Ni-Cd ou encore plomb.

La capacité et la puissance de ces batteries sont en constante augmentation, notamment grâce à la technologie lithium-ion "Li-ion". Cependant, ce type de batteries pose des problèmes liés à la température de fonctionnement. En effet, les batteries au lithium-ion ont des performances limitées avec des températures négatives, et les températures élevées les dégradent rapidement.

Pour améliorer leur fonctionnement à froid, il est possible de modifier les matériaux des électrodes, ou l'électrolyte, mais ces solutions peuvent dégrader certaines performances des batteries, notamment à chaud, ce qui réduit leur durée de vie. On peut aussi prévoir un nombre plus important de cellules en parallèle. Ces différentes solutions augmentent notablement les coûts des batteries.

Une autre solution consiste à réguler la température de ces batteries. On connaît par exemple, du document FR2987499 un système de climatisation pour une batterie de servitude d'un véhicule automobile, comprenant le carter hermétique prévu pour recevoir la batterie, ce réceptacle ayant à une première extrémité une introduction d'air, et à une deuxième extrémité une évacuation d'air.

Ce système donne satisfaction mais dans le cas où les dimensions de la batterie varient, en particulier sa longueur, en fonction des options présentes dans le véhicule, il est nécessaire de modifier la configuration du carter afin de l'adapter aux dimensions de la batterie et s'il y a lieu au positionnement des cosses.

L'invention vise à remédier efficacement à cet inconvénient en proposant un ensemble comportant :
- une batterie, et
- un carter contenant la batterie de façon à former une lame d'air autour de la batterie, ledit carter comportant:
- un bac destiné à recevoir une partie inférieure de la batterie,
- un premier capot de fermeture du bac comportant un trou pour le passage d'une première cosse de la batterie, et
- un deuxième capot de fermeture du bac comportant un trou pour le passage d'une deuxième cosse de la batterie, ledit deuxième capot de fermeture étant une pièce distincte du bac et du premier capot de fermeture,
- le premier capot de fermeture et le deuxième capot de fermeture s'étendant chacun suivant une portion d'une longueur totale de la batterie.

L'invention permet ainsi, en prévoyant la réalisation du carter en trois parties, de ne pas avoir à gérer une diversité de composants sur le carter complet mais uniquement sur un capot de fermeture du bac. En effet, l'invention permet de standardiser la réalisation du bac et d'un capot pour n'avoir à adapter que la longueur de l'autre capot pour s'adapter à une longueur variable de la batterie.

Selon une réalisation, ledit carter comporte un dispositif de fixation, notamment un dispositif d'encliquetage, pour assurer une fixation entre le premier capot de fermeture et le deuxième capot de fermeture.

Selon une réalisation, une longueur du deuxième capot de fermeture est adaptée en fonction d'une longueur de la batterie.

Selon une réalisation, la batterie est maintenue à l'intérieur du bac au moyen d'une bride.

Selon une réalisation, une longueur de la bride est adaptée en fonction d'une longueur de la batterie.

Selon une réalisation, le deuxième capot de fermeture comporte une paroi d'extrémité munie d'une patte destinée à recouvrir la bride.

Selon une réalisation, une conduite d'entrée d'air est ménagé d'une part dans une paroi d'extrémité du bac et d'autre part dans une paroi d'extrémité du premier capot de fermeture.

Selon une réalisation, un ventilateur est fixé en partie sur une paroi d'extrémité du bac et en partie sur une paroi d'extrémité du premier capot de fermeture.

L'invention a également pour objet un véhicule comportant un ensemble tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique en coupe longitudinale d'un ensemble comportant un carter et une batterie;
[Fig. 2] La figure 2 est une vue en perspective d'un premier type de batterie ayant une petite longueur;
[Fig. 3] La figure 3 est une vue en perspective d'un deuxième type de batterie ayant une grande longueur;
[Fig. 4] La figure 4 est une vue en perspective d'un carter selon l'invention contenant une batterie;
[Fig. 5] La figure 5 est une vue en perspective des pièces communes au carter selon la présente invention;
[Fig. 6] La figure 6 est une vue en perspective éclatée d'un capot de fermeture du carter selon l'invention et d'une bride adaptés à une batterie courte;
[Fig. 7] La figure 7 est une vue en perspective éclatée d'un capot de fermeture du carter selon l'invention et d'une bride adaptés à une batterie longue;
[Fig. 8] La figure 8 est une vue en perspective d'un carter selon l'invention adapté à une batterie courte à l'état assemblé;
[Fig. 9] La figure 9 est une vue en perspective d'un carter selon l'invention adapté à une batterie longue à l'état assemblé;
[Fig. 10] La figure 10 est une vue en perspective d'un emplacement situé au niveau d'un passage de roue et réservé à l'implantation de l'ensemble "carter-batterie" selon l'invention;
[Fig. 11] La figure 11 est une vue en perspective illustrant l'implantation de l'ensemble "carter-batterie" selon l'invention dans l'emplacement réservé au niveau du passage de roue.

Les éléments identiques, similaires, ou analogues conservent les mêmes références d'une figure à l'autre.

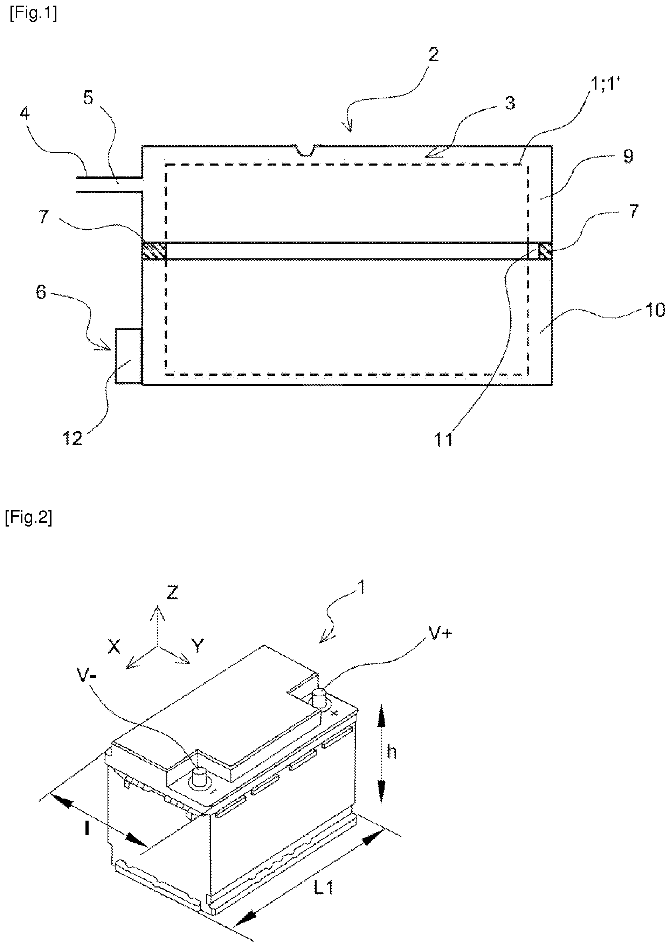

La figure 1 montre un ensemble comportant une batterie 1, 1' et un carter hermétique 2 contenant la batterie 1, 1' de façon à former une lame d'air 3 autour de la batterie 1, 1'. Ce carter hermétique 2 est étanche à l'air. La lame d'air 3 est un espace préservé entre la batterie 1, 1' et une paroi intérieure du carter 2 dans lequel circule de l'air. Cet espace est avantageusement d'une épaisseur de 10 mm, mais selon l'espace disponible autour du carter 2, il peut être réduit jusqu'à 5mm ou au contraire agrandi jusqu'à 50mm. Plus précisément, la batterie 1, 1' est conforme à la définition générale qui a déjà été précédemment explicitée. Cette batterie 1, 1' correspond notamment à une batterie parallélépipédique à cellules électrochimiques de type lithium-ion en remplacement d'une batterie de servitude au plomb. La lame d'air 3 est alors l'espace préservé entre au moins trois faces de la batterie 1, 1' et la paroi intérieure du carter 2.

Le carter 2 comprend, à travers une même première de ses extrémités, une entrée d'air extérieur 5 débouchant dans la lame d'air 3 et une sortie d'air 6 de la lame d'air 3 débouchant vers l'extérieur du carter 2.

L'entrée d'air 5 est fluidiquement reliée par une conduite 4 à une source d'air froid, non représentée, par exemple venant d'une climatisation d'habitacle de véhicule ou tout simplement l'air extérieur (ambiant) au véhicule. Une cloison interne 7 au carter 2 s'étend de la première extrémité à une seconde extrémité opposée du carter 2 à travers la lame d'air 3 en la séparant en deux volumes d'air 9,10. L'entrée d'air 5 débouche dans l'un des volumes d'air 9, et la sortie d'air 6 s'ouvre sur l'autre volume d'air 10, la cloison 7 étant dotée d'un passage d'air 11 entre les deux volumes d'air 9, 10. Il est bien entendu qu'il peut y avoir plusieurs cloisons 7 comme il peut y avoir plus de deux volumes d'air. La cloison 7 est ici de forme plane, mais pourrait en variante avoir une autre forme qui dépend de l'architecture de la batterie 1, 1' et du carter hermétique 2.

On pourra utiliser un ventilateur 12 qui aspire l'air extérieur du carter 2 vers la lame d'air 3. Ce ventilateur 12 pourra être doté d'une résistance chauffante électrique pilotée. Dans ce cas, il suffit d'activer ou non sa résistance chauffante pour respectivement chauffer ou refroidir la batterie 1, 1'. La sortie d'air 6 débouche vers l'extérieur au niveau du ventilateur 12.

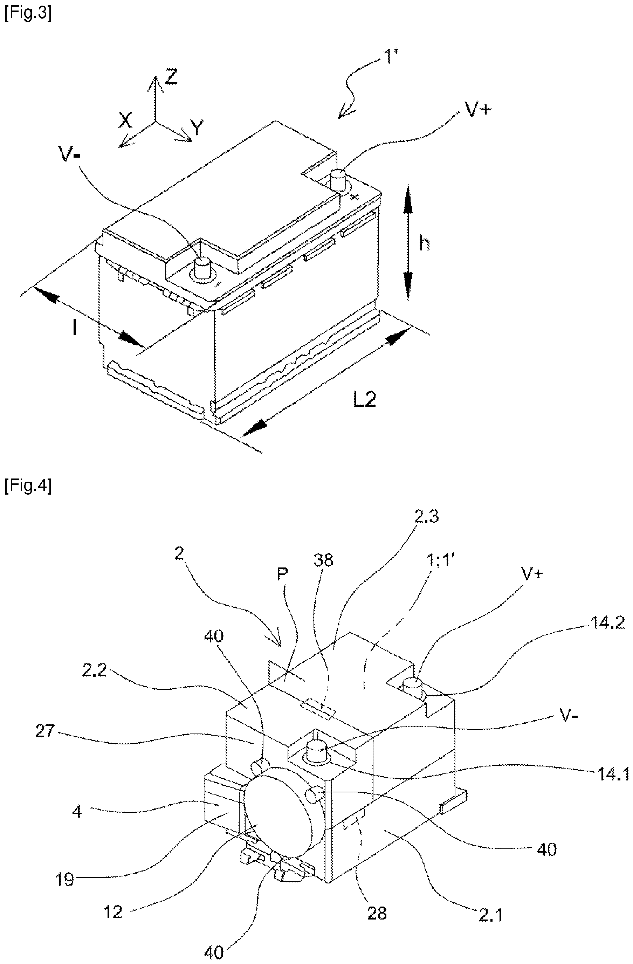

Le véhicule peut intégrer des batteries 1, 1 ' de différentes dimensions en fonction des options présentes dans le véhicule. Dans l'exemple décrit ci-après on envisage deux types de batteries 1, 1' montrées sur les figures 2 et 3 ayant toutes deux une même largeur I mesurée suivant l'axe Y, une même hauteur h mesurée suivant l'axe Z, mais des longueurs différentes L1 et L2 mesurées suivant l'axe longitudinal X. Chaque batterie 1, 1' comporte une cosse positive V+ et une cosse négative V-. Comme on peut le voir sur les figures 2 et 3, le positionnement de la cosse positive pourra varier d'une batterie à l'autre. Dans la suite de la description, les termes relatifs de type "supérieur" et "inférieur" sont entendus par référence à l'orientation de la batterie 1, 1 ' sur les figures 2 et 3 notamment. La partie supérieure de la batterie 1, 1' est située du côté des cosses tandis que la partie inférieure est située du côté opposé.

Comme cela est illustré par la figure 4, afin de pouvoir s'adapter aux dimensions de la batterie 1, 1', le carter 2 est réalisé en trois parties 2.1, 2.2, 2.3, à savoir un bac 2.1 destiné à recevoir une partie inférieure de la batterie 1, 1', un premier capot 2.2 de fermeture du bac 2.1 comportant un trou 14.1 pour le passage d'une première cosse de la batterie 1, 1', par exemple la cosse négative V-, et un deuxième capot 2.3 de fermeture du bac 2.1 comportant un trou 14.2 pour le passage d'une deuxième cosse, par exemple la cosse positive V+. En variante, le positionnement des cosses négative V- et positive V+ de la batterie 1, 1' pourra être inversé.

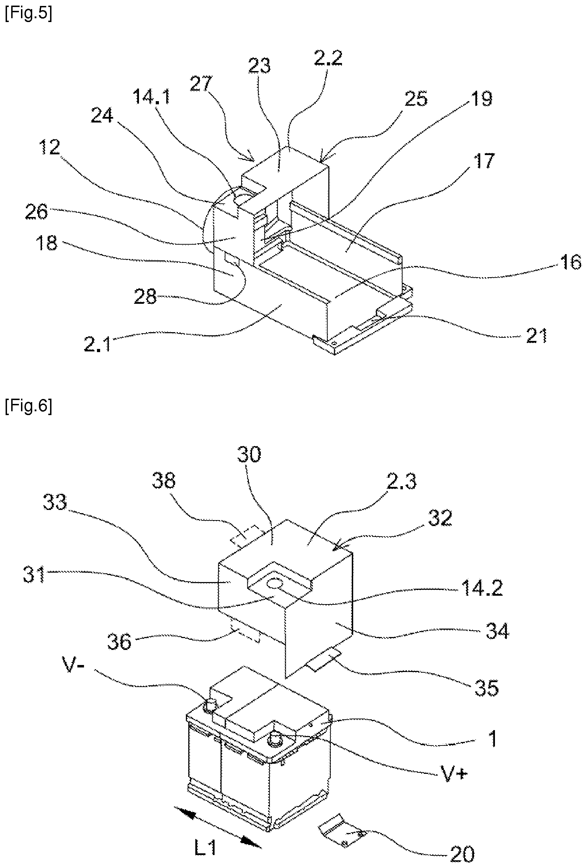

Plus précisément, comme on peut le voir sur la figure 5, le bac 2.1 présente une forme de cuvette. A cet effet, le bac 2.1 comporte une paroi inférieure 16 et deux parois latérales 17, 18 s'étendant suivant deux bords longitudinaux de la paroi inférieure 16. Le bac 2.1 s'étend suivant une longueur légèrement supérieure à celle de la batterie 1, 1' pour permettre son maintien au moyen d'une bride 20, 20'.

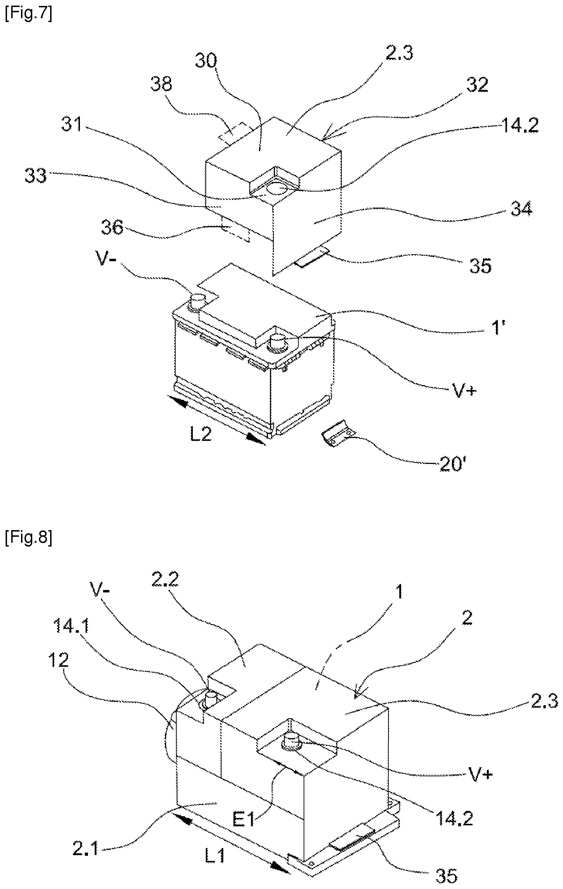

En effet, la batterie 1, 1' est maintenue longitudinalement d'un côté du bac 2.1 au moyen d'une paroi d'extrémité 19 du bac 2.1 et d'un autre côté du bac 2.1 au moyen d'une bride 20, 20' rapportée visible sur les figures 6 et 7. La bride 20, 20' rapportée est destinée à être insérée dans un logement 21 correspondant du bac 2.1 (cf. figure 5). Le logement 21 est ménagé dans une portion en surépaisseur d'un bord d'extrémité de la paroi inférieure 16. La longueur de la bride 20, 20' est adaptée à la longueur de la batterie 1, 1'. Ainsi, pour une batterie 1 de longueur réduite L1, la bride 20 utilisée est plus longue que la bride 20' utilisée pour la batterie 1' de grande longueur L2.

Le premier capot 2.2 de fermeture présente une forme creuse destinée à recevoir une portion de la partie supérieure de la batterie 1, 1', tel que montré sur la figure 5. Le premier capot 2.2 comporte une paroi supérieure 23 munie d'un évidement 24 dans lequel est réalisé le trou de passage 14.1 de la cosse négative V- de la batterie 1, 1'. Deux parois latérales 25, 26 s'étendant en vis-à-vis l'une de l'autre, notamment parallèles l'une par rapport à l'autre, ainsi qu'une paroi d'extrémité 27 sont issues de la paroi supérieure 23. Le premier capot 2.2 comporte des moyens de fixation 28 pour permettre sa fixation avec le bac 2.1, notamment à un bord supérieur des parois latérales 17, 18 du bac 2.1. Les moyens de fixation 28 sont de préférence constitués par des moyens d'encliquetage prenant par exemple la forme d'un ensemble "languettes déformables-logements complémentaires" ou tout autre dispositif équivalent. De préférence, le premier capot 2.2 est une pièce distincte du bac 2.1. Toutefois, en variante, le premier capot 2.2 et le bac 2.1 pourrait former une seule et même pièce obtenue par exemple par moulage.

Le deuxième capot 2.3 visible sur les figures 6 et 7 est une pièce distincte du bac 2.1 et du premier capot 2.2. Le deuxième capot 2.3 présente une forme creuse destinée à recevoir une portion de la partie supérieure de la batterie 1, 1'.

Le deuxième capot 2.3 comporte une paroi supérieure 30 munie d'un évidement 31 dans lequel est réalisé le trou de passage 14.2 de la cosse positive V+ de la batterie 1, 1'. Deux parois latérales 32, 33 s'étendant en vis-à-vis l'une de l'autre, notamment parallèles l'une par rapport à l'autre, ainsi qu'une paroi d'extrémité 34 sont issues de la paroi supérieure 30. La paroi d'extrémité 34 est munie d'une patte 35 destinée à recouvrir la bride 20, 20' afin d'assurer l'étanchéité du carter 2.

Le deuxième capot 2.3 comporte des moyens de fixation 36 pour permettre sa fixation avec le bac 2.1, notamment à un bord supérieur des parois latérales 17, 18 du bac 2.1. Les moyens de fixation 36 sont de préférence constitués par des moyens d'encliquetage prenant par exemple la forme d'un ensemble "languettes déformables-logements complémentaires" ou tout autre dispositif équivalent.

Un dispositif de fixation 38, notamment un dispositif d'encliquetage, assure une fixation entre le premier capot 2.2 et le deuxième capot 2.3. La fixation entre le premier capot 2.2 et le deuxième capot 2.3 peut être effectuée suivant une zone de jonction s'étendant dans un plan vertical P perpendiculaire aux parois latérales 17, 18 du bac 2.1. Le dispositif d'encliquetage 38 pourra consister par exemple en un ensemble "languettes déformables-logements complémentaires" ou tout autre dispositif adapté à l'application. En variante, le premier capot 2.2 et le deuxième capot 2.3 pourront être fixés entre eux par vissage ou soudage ou tout autre procédé de fixation adapté.

Le premier capot 2.2 et le deuxième capot 2.3 s'étendent chacun suivant une portion d'une longueur totale de la batterie 1, 1' mesurée suivant l'axe longitudinal X. Une longueur du premier capot 2.2 est constante d'une configuration de batterie 1, 1' à une autre. Autrement dit, la longueur du premier capot 2.2 est constante quelle que soit la longueur de la batterie 1, 1' contenue par le carter 2.

Une longueur du deuxième capot 2.3 est adaptée en fonction d'une longueur de la batterie 1, 1'. Une somme de la longueur du premier capot 2.2 et du deuxième capot 2.3 est sensiblement égale à la longueur de la batterie 1, 1' correspondante à laquelle s'ajoute bien entendu l'épaisseur de la ou des zones de passage d'air.

L'invention permet ainsi de standardiser la réalisation du bac 2.1 et du premier capot 2.2 pour n'avoir à adapter que la longueur du deuxième capot 2.3 pour s'adapter à une longueur variable de la batterie 1, 1'.

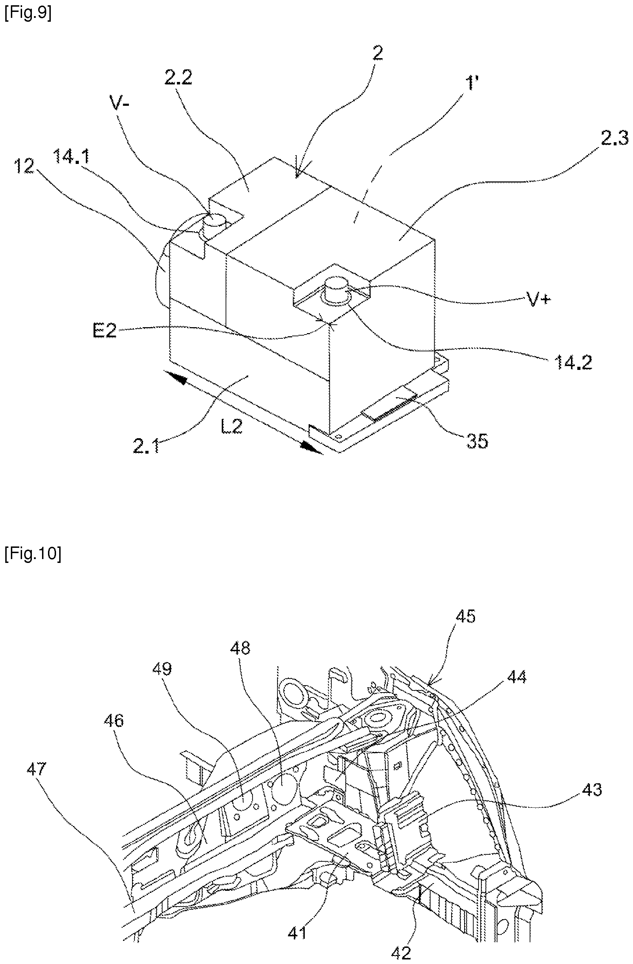

Il est également possible de décaler le positionnement du trou de passage 14.2 de la cosse V+ d'une configuration de batterie 1, 1' à une autre, comme cela ressort des figures 8 et 9. En effet, l'écart entre le trou de passage 14.2 et la face d'extrémité du capot 2.3 est plus grand pour la batterie de longueur L1 que pour la batterie de longueur L2 (cf. écarts E1 et E2).

La conduite d'entrée d'air 4 est ménagée d'une part dans la paroi d'extrémité 19 du bac 2.1 et d'autre part dans la paroi d'extrémité 27 du premier capot 2.2. Autrement dit, la conduite d'entrée d'air 4 est définie d'une part par une portion du bac 2.1 et d'autre part par une portion du premier capot 2.2.

Le ventilateur 12 est fixé en partie sur la paroi d'extrémité 27 du premier capot 2.2 et en partie sur la paroi d'extrémité 19 du bac 2.1. A cet effet, le ventilateur 12 comporte des oreilles de fixation 40 munies d'un trou de passage d'un organe de fixation, tels qu'une vis ou un rivet ou tout autre organe adapté à l'application.

Le bac 2.1, le premier capot 2.2, et le deuxième capot 2.3 sont réalisés de préférence dans un matériau plastique. Ces pièces pourront être réalisées par un procédé de moulage par injection. En variante, les pièces 2.1, 2.2, 2.3 pourront être réalisées dans un matériau métallique ou un matériau composite.

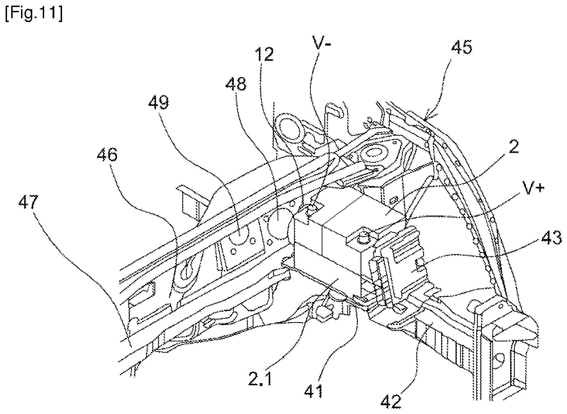

Comme cela est illustré par les figures 10 et 11, le carter 2 est disposé dans le bloc avant du véhicule contenant le moteur. Le carter 2 est fixé via le bac 2.1 sur un support 41 lequel est solidaire d'un brancard 42 du véhicule. Un calculateur 43 est également fixé sur le support 41 ce qui limite l'espace disponible suivant l'axe longitudinal X.

La conduite d'entré d'air 4 débouche dans une fenêtre 44 ménagée dans une zone de passage de roue 45 du véhicule. Cette fenêtre 44 permet également le passage d'une canalisation de frein (non représentée). Une extrémité de l'ensemble "carter 2-batterie 1, 1‴ se situe en regard d'un tablier 46 comportant une traverse 47, une ouverture 48 pour le passage d'un faisceau électrique, et une ouverture 49 pour le passage d'un amplificateur de freinage.

## Revendications

1. Ensemble comportant :
- une batterie (1, 1'), et
- un carter (2) contenant la batterie (1, 1') de façon à former une lame d'air (3) autour de la batterie (1, 1'), **caractérisé en ce que** ledit carter (2) comporte:
- un bac (2.1) destiné à recevoir une partie inférieure de la batterie (1, 1'),
- un premier capot de fermeture (2.2) du bac (2.1) comportant un trou (14.1) pour le passage d'une première cosse (V+, V-) de la batterie (1, 1'), et
- un deuxième capot de fermeture (2.3) du bac (2.1) comportant un trou (14.2) pour le passage d'une deuxième cosse (V+, V-) de la batterie (1, 1'), ledit deuxième capot de fermeture (2.3) étant une pièce distincte du bac (2.1) et du premier capot de fermeture (2.2),
- et **en ce que** le premier capot de fermeture (2.2) et le deuxième capot de fermeture (2.3) s'étendent chacun suivant une portion d'une longueur totale de la batterie (1, 1').

2. Ensemble selon la revendication 1, **caractérisé en ce que** le carter (2) comporte un dispositif de fixation (38), notamment un dispositif d'encliquetage, pour assurer une fixation entre le premier capot de fermeture (2.2) et le deuxième capot de fermeture (2.3).

3. Ensemble selon la revendication 1 ou 2, **caractérisé en ce qu'**une longueur du deuxième capot de fermeture (2.3) est adaptée en fonction d'une longueur de la batterie (1, 1').

4. Ensemble selon l'une quelconque des revendications 1 à 3, **caractérisé en ce que** la batterie (1, 1') est maintenue à l'intérieur du bac (2.1) au moyen d'une bride (20, 20').

5. Ensemble selon la revendication 4, **caractérisé en ce qu'**une longueur de la bride (20, 20') est adaptée en fonction d'une longueur de la batterie (1, 1').

6. Ensemble selon la revendication 4 ou 5, **caractérisé en ce que** le deuxième capot de fermeture (2.3) comporte une paroi d'extrémité (34) munie d'une patte (35) destinée à recouvrir la bride (20, 20').

7. Ensemble selon l'une quelconque des revendications 1 à 6, **caractérisé en ce qu'**une conduite d'entrée d'air (4) est ménagé d'une part dans une paroi d'extrémité du bac (2.1) et d'autre part dans une paroi d'extrémité du premier capot de fermeture (2.2).

8. Ensemble selon l'une quelconque des revendications 1 à 7, **caractérisé en ce qu'**un ventilateur (12) est fixé en partie sur une paroi d'extrémité du bac (2.1) et en partie sur une paroi d'extrémité du premier capot de fermeture (2.2).

9. Véhicule comportant un ensemble tel que défini selon l'une quelconque des revendications précédentes.

## Patentansprüche

1. Baugruppe bestehend aus:
- eine Batterie (1, 1') und
- ein Gehäuse (2), das die Batterie (1, 1') so enthält, dass um die Batterie (1, 1') ein Luftspalt (3) gebildet wird, **dadurch gekennzeichnet, dass** das Gehäuse (2) Folgendes umfasst:
- eine Wanne (2.1), die zur Aufnahme eines unteren Teils der Batterie (1, 1') bestimmt ist,
- einen ersten Verschlussdeckel (2.2) des Behälters (2.1), der ein Loch (14.1) für den Durchgang eines ersten Anschlusses (V+, V-) der Batterie (1, 1') aufweist, und
- ein zweiter Verschlussdeckel (2.3) des Fachs (2.1), der ein Loch (14.2) für den Durchgang eines zweiten Anschlusses (V+, V-) der Batterie (1, 1') umfasst, wobei der zweite Verschlussdeckel (2.3) wobei es sich um einen separaten Teil des Tabletts (2.1) und des ersten Verschlussdeckels (2.2) handelt,
- und dass sich der erste Verschlussdeckel (2.2) und der zweite Verschlussdeckel (2.3) jeweils über einen Abschnitt einer Gesamtlänge der Batterie (1, 1') erstrecken.

2. Baugruppe nach Anspruch 1, **dadurch gekennzeichnet, dass** das Gehäuse (2) eine Befestigungsvorrichtung (38), insbesondere eine Schnappbefestigungsvorrichtung, aufweist, um eine Befestigung zwischen der ersten Verschlusskappe (2.2) und der zweiten Verschlusskappe (2.3) zu gewährleisten.

3. Baugruppe nach Anspruch 1 oder 2, **dadurch gekennzeichnet, dass** eine Länge der zweiten Verschlusskappe (2.3) in Abhängigkeit einer Länge der Batterie (1, 1') angepasst ist.

4. Baugruppe nach einem der Ansprüche 1 bis 3, **dadurch gekennzeichnet, dass** die Batterie (1, 1') mittels eines Flansches (20, 20') im Inneren des Behälters (2.1) gehalten ist.

5. Baugruppe nach Anspruch 4, **dadurch gekennzeichnet, dass** eine Länge des Flansches (20, 20') in Abhängigkeit von einer Länge der Batterie (1, 1') angepasst ist.

6. Baugruppe nach Anspruch 4 oder 5, **dadurch gekennzeichnet, dass** die zweite Verschlusskappe (2.3) eine Endwand (34) aufweist, die mit einer Lasche (35) versehen ist, die dazu bestimmt ist, den Flansch (20, 20') abzudecken.

7. Baugruppe nach einem der Ansprüche 1 bis 6, **dadurch gekennzeichnet, dass** einerseits in einer Stirnwand des Tanks (2.1) und andererseits in einer Stirnwand des ersten Verschlusses ein Lufteinlassrohr (4) vorgesehen ist Kappe (2.2).

8. Baugruppe nach einem der Ansprüche 1 bis 7, **dadurch gekennzeichnet, dass** ein Ventilator (12) teilweise an einer Endwand des Tanks (2.1) und teilweise an einer Endwand des ersten Verschlussdeckels (2.2) befestigt ist.

9. Fahrzeug, umfassend eine Baugruppe nach einem der vorhergehenden Ansprüche.

## Claims

1. Assembly comprising:
- a battery (1, 1'), and
- a casing (2) containing the battery (1, 1') so as to form an air gap (3) around the battery (1, 1'), **characterized in that** said casing (2) comprises:
- a tray (2.1) intended to receive a lower part of the battery (1, 1'),
- a first closing cover (2.2) of the container (2.1) comprising a hole (14.1) for the passage of a first terminal (V+, V-) of the battery (1, 1'), and
- a second closure cover (2.3) of the tray (2.1) comprising a hole (14.2) for the passage of a second terminal (V+, V-) of the battery (1, 1'), said second closure cover (2.3) being a separate part of the tray (2.1) and the first closing cover (2.2),
- and **in that** the first closure cover (2.2) and the second closure cover (2.3) each extend along a portion of a total length of the battery (1, 1').

2. Assembly according to Claim 1, **characterized in that** the casing (2) comprises a fixing device (38), in particular a snap-fastening device, to ensure fixing between the first closing cap (2.2) and the second closing cap (2.3).

3. Assembly according to Claim 1 or 2, **characterized in that** a length of the second closure cap (2.3) is adapted as a function of a length of the battery (1, 1').

4. Assembly according to any one of Claims 1 to 3, **characterized in that** the battery (1, 1') is held inside the container (2.1) by means of a flange (20, 20').

5. Assembly according to Claim 4, **characterized in that** a length of the flange (20, 20') is adapted as a function of a length of the battery (1, 1').

6. Assembly according to Claim 4 or 5, **characterized in that** the second closure cap (2.3) comprises an end wall (34) provided with a lug (35) intended to cover the flange (20, 20').

7. Assembly according to any one of Claims 1 to 6, **characterized in that** an air inlet pipe (4) is provided on the one hand in an end wall of the tank (2.1) and on the other hand in an end wall of the first closure cap (2.2).

8. Assembly according to any one of Claims 1 to 7, **characterized in that** a fan (12) is fixed partly to an end wall of the tank (2.1) and partly to an end wall of the first cover of closure (2.2).

9. Vehicle comprising an assembly as defined according to any one of the preceding claims.
